# EUROPÄISCHE PATENTANMELDUNG

(11) **EP 4 789 594 A1**
(43) Veröffentlichungstag der Anmeldung: **12.08.2026**
(21) Anmeldenummer: 25156456.3
(22) Anmeldetag: 07.02.2025
(51) Int. Cl.: A47J 43/07

(54) **KÜCHENMASCHINE MIT GEWICHTSSENSOR UND HERSTELLUNGSVERFAHREN**

(71) Anmelder: Vorwerk & Co. Interholding GmbH, 42275 Wuppertal (DE)
(72) Erfinder: LANG, Torsten, 42657 Solingen (DE)
(74) Vertreter: Gille Hrabal Partnerschaftsgesellschaft mbB Patentanwälte

(57) **Zusammenfassung**

Die Erfindung betrifft eine Küchenmaschine (1) zum Zubereiten einer Speise (20) durch Zerkleinern und/oder Erhitzen der Speise (20) in einem Topf (2) der Küchenmaschine (1). Die Küchenmaschine (1) umfasst: eine oder mehrere Abstützeinheiten (3) zum Abstützen der Küchenmaschine (1) auf einem Untergrund (19), ein Gehäuse (4) mit einem Topfaufnahmebereich (12) für den Topf (2), und einen Antrieb (8) innerhalb des Gehäuses (4) zum Antreiben eines Werkzeugs (9) für das Zerkleinern einer Speise (20). Die Küchenmaschine (1) weist eine Gewichtssensoreinheit (10) auf, die umfasst: ein Brückenelement (14), einen Sensor (15) zur Ausgabe eines analogen Gewichtsmesssignals, ein Analog-Digital-Wandler (16), eine digitale Signalverarbeitungseinheit (17) und eine Speichereinheit (18) zum Speichern mindestens eines Kalibrierungswertes. Der Analog-Digital-Wandler (16) und die digitale Signalverarbeitungseinheit (17) sind so konfiguriert, dass der Analog-Digital-Wandler (16) das analoge Gewichtsmesssignal in ein digitales Signal umgewandelt, das durch die digitalen Signalverarbeitungseinheit (17) mithilfe des mindestens eines Kalibrierungswertes der Speichereinheit (18) verarbeitet wird, um ein digitales Gewichtsmesssignal (21) zu erzeugen, das von der Gewichtssensoreinheit (10) bereitgestellt werden kann. Der Sensor (15), der Analog-Digital-Wandler (16), die Signalverarbeitungseinheit (17) und die Speichereinheit (18) sind an dem Brückenelement (14) angebracht. Das Brückenelement (14) verbindet einen Befestigungsbereich (5) des Gehäuses (4) mit einer der einen oder mehreren Abstützeinheiten (3) mechanisch, derart, dass sich das von der Gewichtssensoreinheit (10) ausgegebene digitale Gewichtsmesssignal (21) erhöht, wenn eine Speise (20) in den Topf (2) der Küchenmaschine (1) hinzugefügt wird. Die Küchenmaschine (1) weist eine oder mehrere Gewichtssensoreinheiten (10) auf. Eine verbesserte Küchenmaschine mit einer besonders präzisen Gewichtsmessung kann auf diese Weise mit geringerem Herstellungsaufwand bereitgestellt werden. Die Erfindung betrifft ferner ein Herstellungsverfahren.

## Beschreibung

Die Erfindung betrifft eine Küchenmaschine zum Zubereiten einer Speise durch Zerkleinern und/oder Erhitzen der Speise in einem Topf der Küchenmaschine, wobei die Küchenmaschine umfasst: eine oder mehrere Abstützeinheiten zum Abstützen der Küchenmaschine auf einem Untergrund, ein Gehäuse mit einem Topfaufnahmebereich für den Topf, einen Antrieb innerhalb des Gehäuses zum Antreiben eines Werkzeugs für das Zerkleinern einer Speise. Erfindung betrifft ferner ein Herstellungsverfahren.

Die Druckschriften EP1123678B1 und DE102009059242A1 der Anmelderin offenbaren eine Küchenmaschine, die Dehnmessstreifen in den Füßen der Küchenmaschine einsetzt, um analoge Messignale kabelgebunden zu einer Auswerteelektronik zu transferieren. In bisherigen Küchenmaschinen dieser Art wurden die analogen Messignale mehrerer Füße zu einem zentralen Mikrocontroller auf einer Hauptplatine geleitet und dort verarbeitet, um einer Steuerung der Küchenmaschine ein Gewichtswert bereitzustellen. Die Steuerung benötigt den Gewichtswert für die Interaktionen mit dem Benutzer zur geführten Zubereitung einer Speise. Bei diesen bestehenden Küchenmaschinen erfolgt eine Kalibrierung der Gewichtssensoren im Anschluss an den Einbau der Komponenten für die Gewichtserfassung einschließlich der Dehnmessstreifen. Im Zuge des gestiegenen Wettbewerbs wird eine kontinuierliche Verbesserung der Küchenmaschinen und Reduzierung der Herstellungskosten allgemein angestrebt.

Die vorgenannten, aus dem Stand der Technik bekannten Merkmale können einzeln oder in beliebiger Kombination mit einem der nachfolgend beschriebenen erfindungsgemäßen Gegenstände und Ausführungsformen kombiniert werden.

Es ist Aufgabe der Erfindung, eine weiterentwickelte Küchenmaschine und ein weiterentwickeltes Herstellungsverfahren bereitzustellen.

Zur Lösung der Aufgabe dienen eine Küchenmaschine gemäß Anspruch 1 sowie ein Herstellungsverfahren gemäß dem Nebenanspruch. Vorteilhafte Ausführungsformen ergeben sich aus den Unteransprüchen.

Zur Lösung der Aufgabe dient eine Küchenmaschine zum Zubereiten einer Speise durch Zerkleinern und/oder Erhitzen der Speise in einem Topf der Küchenmaschine. Die Küchenmaschine umfasst: eine oder mehrere Abstützeinheiten zum Abstützen der Küchenmaschine auf einem Untergrund, ein Gehäuse mit einem Topfaufnahmebereich für den Topf, und einen Antrieb innerhalb des Gehäuses zum Antreiben eines Werkzeugs für das Zerkleinern einer Speise. Insbesondere ist das Gehäuse mehrteilig und/oder umfasst mindestens ein oberes Gehäuseteil, das auf einem unteren Gehäuseteil befestigt ist.

Die Küchenmaschine weist eine Gewichtssensoreinheit auf, d.h., mindestens eine Gewichtssensoreinheit. Die Gewichtssensoreinheit umfasst, d.h., wenn die Küchenmaschine mehrere Gewichtssensoreinheiten aufweist, umfasst jede der Gewichtssensoreinheit jeweils folgende Komponenten: ein Brückenelement, einen Sensor zur Ausgabe eines analogen Gewichtsmesssignals, ein Analog-Digital-Wandler, eine digitale Signalverarbeitungseinheit und/oder eine Speichereinheit zum Speichern mindestens eines Kalibrierungswertes. Insbesondere ist das Brückenelement aus einem Vollmaterial, vorzugsweise Metall, besonders bevorzugt Aluminium, gefertigt. Insbesondere ist das Brückenelement stabförmig und/oder bildet einen Waagebalken oder Halbbalken. Der Sensor enthält insbesondere einen oder mehrere Dehnmessstreifen. Vorzugsweise hat der Sensor einen Aufbau einer Wheatstone-Messbrücke.

Der Analog-Digital-Wandler und die digitale Signalverarbeitungseinheit sind bevorzugt so konfiguriert, dass der Analog-Digital-Wandler das analoge Gewichtsmesssignal des Sensors in ein digitales Signal umgewandelt, das durch die digitalen Signalverarbeitungseinheit mithilfe des mindestens eines Kalibrierungswertes der Speichereinheit verarbeitet wird, um ein digitales Gewichtsmesssignal zu erzeugen. Das digitale Gewichtsmesssignal kann von der Gewichtssensoreinheit bereitgestellt werden. Es stellt also ein Ausgangssignal der Gewichtssensoreinheit dar. Bevorzugt ist eine Datenschnittstelle, bevorzugt ein Anschluss für ein Kabel zur digitalen Datenübertragung und/oder Energieversorgung der Gewichtssensoreinheit, für die Ausgabe des digitalen Gewichtsmesssignal durch die Gewichtssensoreinheit vorgesehen, um das digitale Gewichtsmesssignal von der Gewichtssensoreinheit an eine Steuerungseinheit der Küchenmaschine zu übertragen. Bevorzugt wird das digitale Gewichtsmesssignal von der Gewichtssensoreinheit zu einer Hauptplatine der Küchenmaschine und von dort zur Steuerungseinheit übertragen, bevorzugt ohne eine Zwischenverarbeitung oder Änderung des digitalen Gewichtsmesssignals. Insbesondere ist der Anschluss an dem Brückenelement angebracht. Bevorzugt ermöglichen der Anschluss und/oder das Kabel das Inter-Integrated Circuit (I2C) Protokoll und/oder eine Bus-Verbindung. Z.B. können drei Gewichtssensoreinheiten jeweils über einen I2C-Bus mit einer Hauptplatine oder der Steuereinheit verbunden werden. Insbesondere kann ein Sensor somit auf elektronischem Wege eindeutig identifiziert werden. Eine Messdatenübertragung kann optional verschlüsselt erfolgen.

Der Sensor, der Analog-Digital-Wandler, die Signalverarbeitungseinheit und die Speichereinheit sind an dem Brückenelement angebracht. Das Brückenelement bildet mit dem an dem Brückenelement angebrachten Komponenten eine eigenständige Baugruppe, die in die Küchenmaschine montiert, demontiert und ausgetauscht werden kann, ohne dafür den Sensor, den Analog-Digital-Wandler, die Signalverarbeitungseinheit oder die Speichereinheit von dem Brückenelement zu lösen. Insbesondere sind die an dem Brückenelement angebrachten Komponenten so an dem Brückenelement angebracht, dass ein Lösen einer der Komponente nicht vorgesehen oder nicht zerstörungsfrei möglich ist. Beispielsweise sind stoffschlüssige Verbindungen wie z.B. eine Klebverbindung oder eine Lötverbindung nicht für ein Lösen vorgesehen und wird hier als nicht zerstörungsfrei lösbar bezeichnet. Bevorzugt ist das Anbringen an dem Brückenelement durch eine stoffschlüssige und/oder flächige Verbindung realisiert, vorzugsweise durch eine Klebverbindung, bevorzugt Leiterplattenkleber, insbesondere polychlorierte Biphenyle (PCB) Kleber. Insbesondere sind ein oder mehrere der genannten Komponenten als ein gemeinsames oder integriertes elektronisches Bauelement realisiert, wie z.B. ein Chip, der die Signalverarbeitungseinheit, den Analog-Digital-Wandler und/oder die Speichereinheit beinhaltet. Wenn ein solches elektronisches Bauelement auf das Brückenelement durch eine stoffschlüssige Verbindung angebracht ist, gelten im Sinne der vorliegenden Anmeldung auch die in dem elektronischen Bauelement enthaltenen Komponenten wie z.B. ein integrierter Analog-Digital-Wandler und/oder integrierter Speichereinheit als durch eine stoffschlüssige Verbindung an dem Brückenelement angebracht.

Das Brückenelement verbindet einen Befestigungsbereich des Gehäuses mit einer der einen oder mehreren Abstützeinheiten mechanisch, derart, dass sich das von der Gewichtssensoreinheit ausgegebene digitale Gewichtsmesssignal erhöht, wenn eine Speise in den Topf der Küchenmaschine hinzugefügt wird. Die Küchenmaschine weist eine oder mehrere Gewichtssensoreinheiten auf. Die durch die hinzugefügte Speise erzeugte Gewichtskraft wird vom Topf über den Topfaufnahmebereich auf das Gehäuse übertragen. Wenn nur eine Gewichtssensoreinheit vorgesehen ist, überträgt das Brückenelement die gesamte durch die hinzugefügte Speise erzeugte Gewichtskraft von dem Befestigungsbereich auf die Abstützeinheit. Wenn mehrere Gewichtssensoreinheiten vorgesehen sind, überträgt jedes Brückenelement einen Teil der gesamten durch die hinzugefügte Speise erzeugte Gewichtskraft von dem jeweiligen Befestigungsbereich auf die jeweilige Abstützeinheit, so dass alle Brückenelemente in Summe die gesamte erzeugte Gewichtskraft übertragen.

Dadurch, dass der Sensor, der Analog-Digital-Wandler, die Signalverarbeitungseinheit und die Speichereinheit an dem Brückenelement angebracht sind, kann eine verbesserte Küchenmaschine mit einer besonders präzisen Gewichtsmessung mit geringerem Herstellungsaufwand bereitgestellt werden.

Der Erfindung liegt die Erkenntnis zu Grunde, dass eine Abkehr von der bisherigen, synergetischen, gemeinsamen Nutzung von Komponenten bzw. ein Vorsehen einer größeren Anzahl gleichartiger Komponenten wie z.B. Analog-Digital-Wandler eine solch große Reduzierung der Montagezeit ermöglichen, dass der Mehraufwand wegen der zusätzlichen Komponenten durch den reduzierten Montageaufwand überkompensiert wird und zugleich eine höhere Messgenauigkeit erzielt wird.

Bei den bisherigen, eingangs beschriebenen Küchenmaschinen erfolgte die Kalibrierung der Gewichtssensoren nach dem Einbau der Gewichtssensoren. Der Analog-Digital-Wandler, die Signalverarbeitungseinheit und die Speichereinheit wurde auf der bestehenden Hauptplatine angeordnet, so dass eine Platine eingespart werden konnte. Die analogen Signale der Dehnmessstreichen in den Füßen der Küchenmaschine wurde zentral durch einen Analog-Digital-Wandler und einen zentralen Mikroprozessor verarbeitet und auch die Kalibrierwerte auf einem zentralen Speicher auf der bestehenden Hauptplatine abgelegt.

Im Gegensatz dazu sind gemäß der vorliegenden Erfindung unabhängig von der Anzahl der Gewichtssensoreinheiten in einer Gewichtssensoreinheit bzw. jeder der Gewichtssensoreinheiten jeweils ein Analog-Digital-Wandler, eine Signalverarbeitungseinheit und eine Speichereinheit auf dem Brückenelement angebracht, was z.B. eine jeweils eigene Platine oder dergleichen erfordert und insgesamt zunächst zu einem erhöhten Herstellungsaufwand für die Gewichtssensoreinheit bzw. die Gewichtssensoreinheiten führt.

Allerdings können so die Gewichtssensoreinheit oder die Gewichtssensoreinheiten zeitlich unabhängig und zeitlich vor der Montage der Gewichtssensoreinheit oder Gewichtssensoreinheiten in der Küchenmaschine kalibriert werden. Mit anderen Worten kann eine Gewichtssensoreinheit separat hergestellt und kalibriert werden, wobei der mindestens eine Kalibrierungswert, der den oder die für eine Linearisierung des digitalen Gewichtsmesssignals notwendigen Parameter enthält, auf der Speichereinheit der Gewichtssensoreinheit abgelegt wird. Eine Vielzahl von Gewichtssensoreinheiten kann auf diese Weise effizienter hergestellt und die Küchenmaschine mit den Gewichtssensoreinheiten schneller montiert werden, weil das bisherige, zeitaufwändige Kalibrieren während der Montage der Küchenmaschine entfällt.

Als zusätzlicher Vorteil hat sich zudem erwiesen, dass die nun zwangsläufig im Vergleich zu vorher kürzeren Leitungswege für die analogen Signale der Sensoren zum Analog-Digital-Wandler eine höhere Robustheit gegen äußere Einflüsse und eine größere Messgenauigkeit zur Folge haben. Außerdem kann durch die vorliegende Erfindung eine defekte Gewichtssensoreinheit auch mit weniger Aufwand als zuvor ausgetauscht werden.

In einer Ausführungsform umfasst die Küchenmaschine eine Benutzerschnittstelle, über die ein Gewicht einer sich in dem Topf befindlichen Speise anzeigt werden kann, und/oder eine Steuerungseinheit zum Steuern der Benutzerschnittstelle. In einer Ausführungsform ist die Küchenmaschine so konfiguriert, dass wenn mehrere Gewichtssensoreinheiten vorhanden sind, die Steuerungseinheit von jeder der Gewichtssensoreinheiten jeweils ein separates digitales Gewichtsmesssignal erhält und daraus das Gewicht einer sich in dem Topf befindlichen Speise berechnet, um es über die Benutzerschnittstelle anzuzeigen. Eine besonders Fehlerrobuste Gewichtsmessung wird so ermöglicht. Insbesondere erfolgt die Berechnung durch Aufaddieren der separaten digitalen Gewichtsmesssignale der einzelnen Gewichtssensoreinheiten. Vorzugsweise setzt die Steuerungseinrichtung die Summe der von allen Gewichtssensoreinheiten erhaltenen Gewichtsmesssignale zu Null, damit das angezeigte Gewicht nicht das Eigengewicht der Küchenmaschine enthält. Insbesondere entspricht die Summe der von allen Gewichtssensoreinheiten erhaltenen Gewichtsmesssignale dem Gewicht des Gehäuses und aller auf dem Gehäuse wirkenden Lasten, also die Last der gesamten Küchenmaschine inklusive Topf, jedoch ohne das Eigengewicht der einen oder mehreren Abstützeinheiten.

In einer Ausführungsform ist die Gewichtssensoreinheit bzw. sind die Gewichtssensoreinheiten jeweils so konfiguriert, dass die Speichereinheit den mindestens einen Kalibrierungswert der Gewichtssensoreinheit umfasst (also enthält oder speichert), wenn die Gewichtssensoreinheit montiert wird. Eine besonders zeiteffektive Montage einer bereits konfigurierten Gewichtssensoreinheit wird so ermöglicht.

In einer Ausführungsform sind die Gewichtssensoreinheiten baugleich, wenn mehrere Gewichtssensoreinheiten vorgesehen sind. Eine besonders zeiteffektive Montage wird so ermöglicht. Vorzugsweise sind genau drei Gewichtssensoreinheiten vorgesehen.

In einer Ausführungsform ist das Brückenelement oder jedes der Brückenelemente jeweils mit einem ersten Ende bewegungsfest an dem Befestigungsbereich des Gehäuses und/oder mit einem zweiten Ende an dem Abstützeinheit befestigt, vorzugsweise durch Verschraubung. Eine besonders präzise Gewichtsmessung kann so ermöglicht werden. Mit Ende ist ein Endbereich gemeint. Ein Endbereich kann bis zu 40% der Gesamtlänge eines länglichen Brückenelements umfassen. Bevorzugt hat das Brückenelement oder jedes der Brückenelemente jeweils an dem ersten Ende eine erste Öffnung, bevorzugt eine Durchgangsöffnung und/oder mit einem Innengewinde, und an dem zweiten Ende eine zweite Öffnung, bevorzugt eine Durchgangsöffnung und/oder mit einem Innengewinde. In einer Ausgestaltung wird eine erste Schraube durch die erste Öffnung und eine zweite Schraube durch die zweite Öffnung geschraubt, vorzugsweise in entgegengesetzte Richtungen. Bevorzugt wird die erste Schraube von oben nach unten durch die erste Öffnung geschraubt und die zweite Schraube von unten nach oben durch die zweite Öffnung geschraubt. In einer Ausgestaltung hat die erste Schraube und/oder die zweite Schraube die Größe M5.

In einer Ausgestaltung ist das Brückenelement länglich und/oder erstreckt sich von dem ersten Ende zum zweiten Ende in Längenrichtung. Bevorzugt ist die Längenrichtung parallel zu einem ebenen Untergrund, wenn die Küchenmaschine darauf aufgestellt ist. Ein Querschnitt des Brückenelements at eine im Wesentlichen rechteckige Form. Eine Länge des Brückenelements ist bevorzugt mindestens fünf und/oder höchstens fünfzehnmal so groß wie dessen Breite. Die Breite ist größer als eine Höhe des Brückenelements, bevorzugt mindestens 25% und/oder höchstens 300% größer als die Höhe. In einer Ausgestaltung entspricht ein engster Durchmesser der ersten Öffnung und/oder der zweiten Öffnung mindestens 30% und/oder höchstens 70% der Breite des Brückenelements.

In einer Ausführungsform ist das Gehäuse mehrteilig und/oder umfasst ein oberes Gehäuseteile und ein unteres Gehäuseteile. Die Gewichtssensoreinheit kann dadurch mit geringerem Aufwand montiert werden. Insbesondere wird nach dem Befestigen der Gewichtssensoreinheit an dem oberen Gehäuseteil das obere Gehäuseteil auf das untere Gehäuseteil gesetzt und daran befestigt. Vorzugsweise wird hierbei die an der Gewichtssensoreinheit angebrachte Abstützeinheit durch eine Durchgangsöffnung des unteren Gehäuseteil geführt. Die Stützeinheit ist beispielsweise unter dem Topfaufnahmebereich angeordnet. Die Richtung "unten" zeigt zur Unterseite der Küchenmaschine, die im aufgestellten Zustand dem Untergrund zugewandt ist. Die Richtung "oben" zeigt entgegengesetzt zu "unten" und/oder von dem Untergrund weg. Insbesondere ist das obere Gehäuseteil innerhalb oder zumindest teilweise innerhalb des Gehäuses oder eines nach außen sichtbaren Gehäuseteils des Gehäuses angeordnet. Bevorzugt ist das untere Gehäuseteil vom Untergrund aus sichtbar (im montierten Zustand und/oder einer sich im betriebsbereiten Zustand auf einem Untergrund aufgestellten Küchenmaschine). Insbesondere hat das untere Gehäuseteil einen äußeren, nach unten sichtbaren Bereich und einen nach oben innenliegenden Bereich, der von außen nicht sichtbar ist.

In einer Ausgestaltung ist die Abstützeinheit mehrteilig und/oder umfasst ein oberer Aufnahmeelement, der an einem unteren Abstützelement zum Aufsetzen auf einen Untergrund befestigt ist. Insbesondere weist das Aufnahmeelement eine Anschrauböffnung auf, so dass eine Schraube durch die zweite Öffnung des Brückenelements und die Anschrauböffnung des Aufnahmeelements geschraubt werden kann, um das Brückenelement mit dem zweiten Ende fest an dem Aufnahmeelement anzuschrauben. Bevorzugt ist die Anschrauböffnung und/oder ein unmittelbar mit dem zweiten Ende des Brückenelements verbundener bzw. befestigter Bereich im montierten Zustand der Abstützeinheit von oben betrachtet außerhalb von dem Aufnahmeelement oder einem mittigen Bereich des Aufnahmeelements angeordnet. Das Aufnahmeelement ragt also von oben betrachtet seitlich über das Abstützelement oder dessen mittigen Bereich über. In einer Ausgestaltung befindet sich der der Sensor bzw. der oder die Dehnmessstreifen im montierten Zustand der Küchenmaschine von oben betrachtet über dem Abstützelement oder über einem mittigen Bereich des Abstützelements. Vorzugsweise steht das erste Ende des Brückenelements ebenfalls an der gegenüberliegenden Seite des Aufnahmeelements über. In einer Ausgestaltung bilden die Abstützeinheit und die Gewichtssensoreinheit im miteinander befestigten Zustand eine im Wesentlichen T-artige Form oder eine "7"- oder "Z"-artige Form von einer Seite betrachtet aus. Durch die in diesem Absatz erläuterten Ausgestaltungen kann eine besonders präzise Gewichtsmessung erfolgen.

In einer Ausführungsform weist das obere Gehäuseteil den Befestigungsbereich auf, an dem das Brückenelement bewegungsfest befestigt ist. Eine bewegungsfeste Befestigung oder Verbindung lässt keine Relativbewegungen zu, die zu einer unplanmäßigen Beeinträchtigung der Gewichtsmessung führen würden. In einer Ausführungsform umfasst das untere Gehäuseteil einen nach oben erstreckenden Vorsprung, auf dem in einem montierten Zustand der Küchenmaschine ein Ende einer ersten Schraube aufliegt. Eine besonders präzise Gewichtsmessung kann so durch Reduzieren von Einflüssen seitens des unteren Gehäuseteils auf die Gewichtsmessung erzielt werden.

In einer Ausführungsform ist die erste Schraube ausgehend vom oberen Gehäuseteil von oben durch eine erste Öffnung des Brückenelements geschraubt ist, um den oberen Gehäuseteil bewegungsfest an dem Brückenelement zu befestigen. Eine besonders präzise Gewichtsmessung kann so wie oben erläutert ermöglicht werden.

In einer Ausführungsform ist das Brückenelements an dem ersten Ende mit der erste Schraube an dem Befestigungsbereich befestigt ist und/oder ist an dem zweiten Ende mit einer zweiten Schraube durch eine zweite Öffnung des Brückenelements an der Abstützeinheit befestigt. Dies ermöglicht eine einfache Montage und präzise Messung.

In einer Ausführungsform ist die zweite Schraube ausgehend von der Abstützeinheit von unten nach oben durch die zweite Öffnung geschraubt. Insbesondere in Verbindung mit der entgegengesetzt orientierten Verschraubung mit der ersten Schraube durch die erste Öffnung wird eine ganz besonders vorteilhafte Kraftübertragung für das Erzielen besonders präziser Messungen, die robust gegen äußere Einflüsse sind, erzielt.

In einer Ausführungsform sind der Analog-Digital-Wandler, die Signalverarbeitungseinheit, die Speichereinheit und mindestens zwei Leiterbahnen auf einer gemeinsamen Platine angeordnet. In einer alternativen oder ergänzenden Ausfügungsform umfasst oder besteht der Sensor aus ein oder mehreren Dehnmessstreifen, der oder die mit den Leiterbahnen verbunden sind, bevorzugt unmittelbar verbunden sind. Vorzugsweise ist die Verbindung durch Löten, Bonding, einen elektrisch leitenden Kleber oder mechanischen Kraftschluss z.B. mithilfe einer Feder realisiert. Wenn ein Dehnmessstreifen vorgesehen ist, werden dessen beide Enden jeweils mittels Löten mit einer Leiterbahn verbunden. Falls mehrere Dehnmessstreifen vorhanden sind, werden Verbindungspunkte von zwei Dehnmessstreifen mittels Löten mit jeweils einer Leiterbahn verbunden.

In einer Ausführungsform ist die Platine eine flexible Leiterfolie und/oder die erste Öffnung erstreckt sich durch die Platine. Durch diese spezielle Umsetzung werden besonders präzise Messungen erzielt, die robust gegen äußere Einflüsse sind, und die Montage vereinfacht, weil das Anschrauben eine größere Anschraubkrafttoleranz zulässt. In einer alternativen Ausführungsform ist die Platine oder ein Teil davon starr, was eine aufwändigere Montage erfordert.

In einer Ausführungsform ist ein Anschluss für ein Kabel zur digitalen Datenübertragung und/oder Energieversorgung auf der Platine und/oder von dem zweiten Ende aus betrachtet hinter der ersten Öffnung auf dem Brückenelement angeordnet. Ein Beeinträchtigen einer Gewichtsmessung durch ein Ziehen am Kabel kann so reduziert werden. Insbesondere ist die Platine ist in Form der flexiblen Leiterfolie auf das Brückenelement geklebt, bevorzugt teilflächig verklebt. Eine besonders schnelle Montage einer Gewichtssensoreinheit für besonders präzise Messungen wird so ermöglicht. Insbesondere wird eine Fläche, bevorzugt eine rechteckige Fläche, um die erste Öffnung für das Verschrauben, die sich durch die flexible Leiterfolie erstreckt, nicht verklebt, um die teilflächige Verklebung zu realisieren. Eine robustere Haftung und Gewichtsmessung wird so erzielt. Ein Anschluss ermöglicht ein manuell lösbares Anschließen eines Kabels, insbesondere durch ein Stecker-Buchse-Verbindung, bevorzugt Wire-to-Board-Steckverbindung. Insbesondere stellt der Anschluss eine Buchse bereit, in die das Kabel mit einem Stecker manuell eingesteckt und auch wieder manuell gelöst werden kann.

Eine Gewichtssensoreinheit mit einem Brückenelement, an dem der Sensor, der Analog-Digital-Wandler, die Signalverarbeitungseinheit und die Speichereinheit im Sinne der vorliegenden Anmeldung an dem Brückenelement "angebracht" sind, kann durch bloßes Demontieren des Brückenelements und Lösen des Kabels zur digitalen Datenübertragung und/oder Energieversorgung der Gewichtssensoreinheit (von einem an dem Brückenelement angebrachten Anschluss) von der Küchenmaschine entfernt und durch eine neue Gewichtssensoreinheit ersetzt werden.

Wenn z.B. der Analog-Digital-Wandler, die Signalverarbeitungseinheit oder der Speichereinheit wie im eingangs zitierten Stand der Technik örtlich getrennt von der Brückenelement-Sensor-Baugruppe in der Küchenmaschine angeordnet sind, damit zumindest eine der genannten Komponenten auch von anderen Einheiten mitbenutzt werden kann, ist diese Komponente oder sind diese Komponenten nicht im Sinne der vorliegenden Anmeldung an dem Brückenelement angebracht, auch nicht indirekt angebracht. Insbesondere sind der Sensor, der Analog-Digital-Wandler, die Signalverarbeitungseinheit und die Speichereinheit direkt auf einer Oberfläche, bevorzugt derselben Oberfläche (also z.B. eine Oberseite), angebracht. Je nach Art und Weise des Anbringens ist es grundsätzlich möglich, dass zwischen einer angebrachten Komponente und der Oberfläche des Brückenelements ein Spalt oder Abstand vorliegt, wobei auch in diesem Fall die Komponente als angebracht anzusehen ist, wenn zum Einbau oder Austausch vorgesehen ist, dass der Gewichtssensoreinheit nur am Brückenelement (manuell) festgehalten wird, um die Gewichtssensoreinheit zu bewegen. Alle an dem Brückenelement angebrachten Komponenten bewegen sich dann von selbst mit. Eine an dem Brückenelement angebrachte Komponente braucht also nicht gesondert gehalten oder getragen werden, wenn eine Gewichtssensoreinheit durch manuelles Ergreifen des Brückenelements örtlich zum Zwecke des Einbaus in die Küchenmaschine oder eines reparaturbedingten Austauschs bewegt wird.

In einer Ausgestaltung ist vorgesehen, dass als Zusatzfunktion mithilfe der Gewichtssensoreinheit eine Temperatur oder Temperaturveränderung bestimmt wird. Zum Beispiel kann die Temperatur mithilfe des Sensors der Gewichtssensoreinheit gemessen und an einen Mikroprozessor auf einer Hauptplatine und/oder der Steuerungseinheit der Küchenmaschine transferiert werden. Eine Kompensation einer Temperaturdrift des Sensors kann so umgesetzt und so das Wiegeergebnis weiter verbessert werden.

In einer Ausgestaltung sind mehrere Füße zum Aufstellen und Sichern der Küchenmaschine auf einem Untergrund vorgesehen. Bevorzugt ist einer der Füße eine Abstützeinheit oder drei der Füße sind jeweils Abstützeinheiten. Bevorzugt bilden drei als Abstützeinheiten ausgestaltete Füße von unten betrachtet die Ecken einer Dreiecksform aus, die bevorzugt spiegelsymmetrisch ist. In einer Weiterentwicklung der Ausgestaltung mit den mehreren Füßen, von denen mindestens ein Fuß eine Abstützeinheit ist, zählt mindestens ein Gleitfuß, ein erster Fuß und/oder ein zweiter Fuß zu diesen Füßen. Bevorzugt ist bzw. sind der erste Fuß und/oder der zweite Fuß rutschhemmend im Vergleich zum Gleitfuß, so dass die Küchenmaschine so an einer Seite (mit dem rutschhemmenden Fuß bzw. mit den rutschhemmenden Füßen) angehoben werden kann, dass sich der rutschhemmende Fuß bzw die rutschhemmenden Füße von dem Untergrund löst bzw. lösen. Hierdurch kann ermöglicht werden, dass Vibrationen während der Speisenzubereitung zumindest teilweise abgeleitet werden können, um einen störenden Einfluss auf die Gewichtssensoreinheit zu reduzieren. Zudem kann anschließend die Küchenmaschine mit relativ geringer Kraft entlang des ebenen Untergrunds (auf dem mindestens einen Gleitfuß) verschoben werden. Dies ermöglicht, dass der Ort der Aufstellung der Küchenmaschine ohne besonders hohen Kraftaufwand durch den Benutzer werden kann. Zugleich wird erreicht, dass die Gewichtssensoreinheit bei einem solchen Verschiebevorgang durch den Benutzer geschont und eventuelle Schäden bestmöglich vermieden werden. Außerdem können Verspannungen abgebaut werden, die sich auf die Gewichtssensoreinheit übertragen können, wenn rutschhemmende Füße (von denen mindestens einer als Abstützeinheit an der Gewichtssensoreinheit befestigt ist) eine Spannung im aufgestellten Zustand nicht selber abbauen können. In einer besonderen Weiterentwicklung können zusätzlich mehrere Kippfüße vorgesehen werden, die einem Kippen entgegenwirken (sowohl im Stand als auch beim Verschieben). Ein Benutzer wird das Küchengerät so aufstellen wollen, dass die Benutzerschnittstelle leicht erreichbar ist. Bevorzugt befindet sich der Gleitfuß oder alle Gleitfüße in einer Nähe einer hinteren Seite der Küchenmaschine, die einer vorderen Seite mit der Benutzerschnittstelle gegenüberliegt. Für ein Verschieben der Küchenmaschine mittels Gleitfuß kann dann ein Benutzer die Seite des Gehäuses nahe der Benutzerschnittstelle ergreifen. Vorzugsweise ist die Küchenmaschine so beschaffen, dass ein Schwerpunkt der Küchenmaschine von oben betrachtet in einem hinteren Bereich, also nahe der hinteren Seite der Küchenmaschine liegt. Ein leichtes, kippsicheres Anheben des Gehäuses nahe der Benutzerschnittstelle kann so ermöglicht werden. Die rutschhemmende Eigenschaft eines Fußes verglichen mit einem Gleitfuß kann beispielsweise durch ein Messen einer seitlichen Schubkraft ermittelt werden, die erforderlich ist, um die Küchenmaschine zu verschieben, wenn entweder ein Gleitfuß oder ein rutschhemmender Fuß mit einer gleitenden Folie überzogen wurde, die sich dann zwischen dem Fuß und dem Untergrund befindet. Aus den Differenzen der ermittelten Schubkräfte mit der Schubkraft gänzlich ohne Folie kann die rutschhemmende bzw. gleitende Eigenschaft ermittelt werden, die zeigen, dass ein rutschhemmender Fuß eine größere Schubkraft erfordert als ein Gleitfuß. Bevorzugt wird für den Gleitfuß zumindest in einem Bereich, der im Betrieb der Küchenmaschine auf dem Untergrund aufsetzt, ein Material mit niedrigem Reibwert bzw. niedrigem Reibungskoeffizienten verglichen mit dem rutschhemmende bzw. den rutschhemmenden Füßen eingesetzt.

Ein weiterer Aspekt der Erfindung betrifft ein Herstellungsverfahren zum Herstellen einer Küchenmaschine, insbesondere gemäß der eingangs beschriebenen Küchenmaschine zur Lösung der Aufgabe. Das Herstellungsverfahren umfasst folgende Schritte in der nachfolgenden, zeitlichen Reihenfolge. Zunächst wird eine Gewichtssensoreinheit hergestellt, die ein Brückenelement aufweist, auf dem ein Sensor zur Ausgabe eines analogen Gewichtsmesssignals, ein Analog-Digital-Wandler, eine digitale Signalverarbeitungseinheit und ein Speichereinheit zum Speichern mindestens eines Kalibrierungswertes angebracht sind bzw. angebracht werden. Anschließend wird die Gewichtssensoreinheit kalibriert und der (durch die Kalibrierung erhaltene) mindestens eine Kalibrierungswert auf der Speichereinheit gespeichert. Schließlich wird die Gewichtssensoreinheit in eine Küchenmaschine zwischen einen Befestigungsbereich eines Gehäuses der Küchenmaschine und eine Abstützeinheit montiert. Insbesondere umfasst die Montage das Befestigen des bevorzugt länglichen Brückenelements mit einem ersten Ende an dem Befestigungsbereich und mit dem gegenüberliegenden zweiten Ende an der Abstützeinheit sowie das Anschließen mindestens eines Kabels zur digitalen Datenübertragung und Energieversorgung an mindestens einen Anschluss der Gewichtssensoreinheit, insbesondere mithilfe einer Steckverbindung. Vorzugsweise sind nur diese drei Schritte für die Montage der Gewichtssensoreinheit bereits ausreichend. Insbesondere ist nach dem Einbau der Gewichtssensoreinheit keine Kalibrierung erforderlich, weil der mindestens eine Kalibrierwert bereits auf dem Speicherelement gespeichert ist und ausreicht, damit der von der Gewichtssensoreinheit ausgegebene, digitale Gewichtsmesswert von der Küchenmaschine vorzugsweise direkt für die Gewichtsermittlung genutzt werden kann.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Schematische Darstellung einer erfindungsgemäßen Küchenmaschine;
- Figur 2:: Schematische Darstellung einer weiteren Ausgestaltung einer erfindungsgemäßen Küchenmaschine;
- Figur 3:: Schematische Darstellung einer Gewichtssensoreinheit, insbesondere der Küchenmaschine der Fig. 1 und/oder Fig. 2;
- Figur 4:: Schematische Darstellung einer mit einer Abstützeinheit verbundenen Gewichtssensoreinheit, insbesondere der Küchenmaschine der Fig. 1;
- Figur 5:: Schematische Darstellung der mit der Abstützeinheit verbundenen Gewichtssensoreinheit der Fig. 4 von schräg unten, das mit einem Befestigungsbereich eines Gehäuses verbunden ist, insbesondere der Küchenmaschine der Fig. 1;
- Figur 6:: Schematische Darstellung einer Durchführung, durch die sich insbesondere die Abstützeinheit der Fig. 5 erstreckt, wenn die Küchenmaschine montiert und betriebsbereit auf einem Untergrund aufgestellt ist.

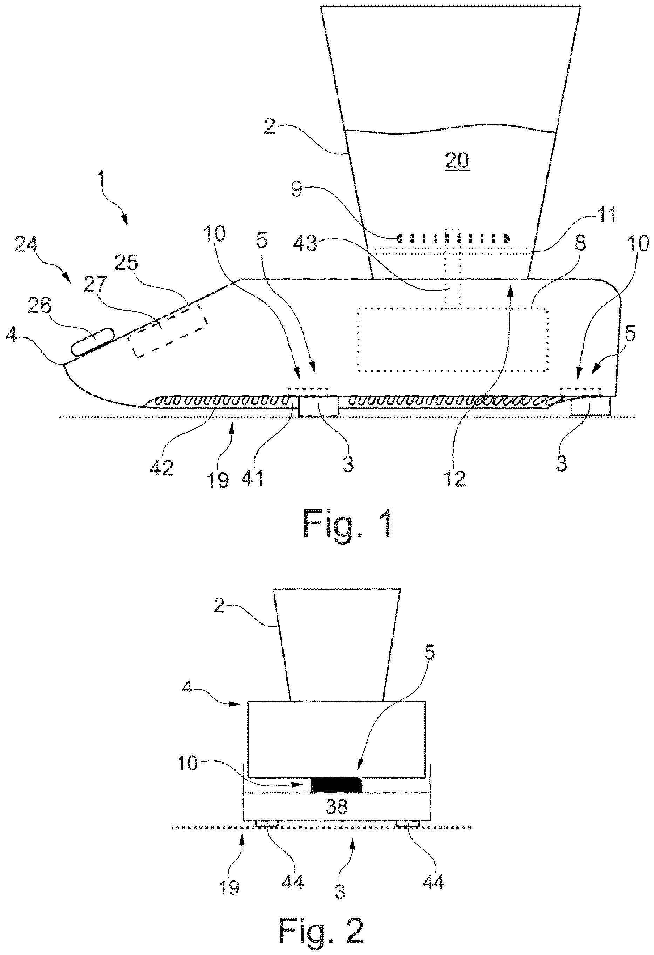

Die Figuren 1 und 2 zeigen beide eine Küchenmaschine 1 zum Zubereiten einer Speise 20 durch Zerkleinern und/oder Erhitzen der Speise 20 in einem Topf 2 der Küchenmaschine 1. Der Topf 2 ist bevorzugt manuell entnehmbar in einem Topfaufnahmebereich 12 eines Gehäuses 4 der Küchenmaschine 1 aufgenommen. Durch ein nicht gezeigtes Loch im Topfboden verbindet im aufgenommenen Zustand des Topfes 2 eine Welle 43 ein Werkzeug 9 zum Mischen und Zerkleinern, das durch einen Antrieb 8 innerhalb des Gehäuses 4 angetrieben werden kann, um sich am Topfboden zu drehen. Eine Heizeinrichtung 11 kann zusätzlich vorgesehen werden, um die Speise 20 in dem Topf 2 zu erwärmen oder zu kochen. Eine Benutzerschnittstelle 24 ist am Gehäuse 4 vorgesehen und/oder umfasst einen Touchscreen-Display 25 mit Bildzeichen zum Betätigen durch den Benutzer. Die Benutzerschnittstelle 24 kann alternativ oder ergänzend einen manuellen Bedienschalter, bevorzugt Drehknopf 26, aufweisen. Insbesondere kann der Drehknopf 26 gegenständlich oder ein bewegbares Bildzeichen auf dem Touchscreen-Display 25 sein. Eine Steuerungseinheit 27 ist vorgesehen, um über das Touchscreen-Display 25 Handlungsanweisungen an einen Benutzer gemäß eines Rezeptschrittes eines elektronisch gespeicherten Rezeptes zu geben. Insbesondere zeigt die Steuerungseinheit 27 ein Gewicht über den Touchscreen-Display 25 an, das mithilfe des oder der Gewichtssensoreinheiten ermittelt wurde. Beispielsweise kann eine Handlungsanweisung gemäß einem Rezeptschritt den Benutzer anweisen, eine Menge einer Speise 20 wie z.B. Nudeln mit einem bestimmten Zielgewicht in den Topf 2 zu geben. Der Benutzer wird dann - insbesondere nach einem Auf-Null-Setzen (Tara) des Gewichts mithilfe der Benutzerschnittstelle 24 - kontinuierlich mehr und mehr Nudeln in den Topf 2 geben und dabei das auf dem Touchscreen-Display 25 angezeigte Gewicht der hinzugefügten Nudeln überwachen. Sobald anhand des angezeigten Gewichts das Zielgewicht erreicht ist, wird der Benutzer keine weiteren Nudeln mehr in den Topf 2 geben und mit dem nächsten Rezeptschritt fortfahren. Insbesondere gibt es Rezeptschritte, die zu einem teilautomatisierten Steuern des Antriebs 8 und/oder Heizelements 11 führen.

Die Küchenmaschine 1 der Fig. 2 weist nur eine einzige Gewichtssensoreinheit 10 auf, die einerseits an einem Befestigungsbereich 5 mit dem Gehäuse 4, das den nicht dargestellten Antrieb 8 enthält, befestigt ist und andererseits an einer Abstützeinheit 3 befestigt ist. Die Abstützeinheit 3 der Küchenmaschine 1 der Fig. 2 weist insbesondere ein Aufnahmeelement 38 auf, an dem die Gewichtssensoreinheit 10 befestigt und mit dem mehrere Standfüße 44 zum Aufsetzen auf einem Untergrund 19 verbunden sind. Wenn eine Speise 20 dem Topf 2 zugegeben wird, wird die hinzugekommene Last vollständig über die Gewichtssensoreinheit 10 von dem Gehäuse 4 auf die Abstützeinheit 3 übertragen und kann durch die Gewichtssensoreinheit 10 gemessen werden.

Die Küchenmaschine 1 der Fig. 1 weist mehrere Abstützeinheiten 3 zum Abstützen der Küchenmaschine 1 auf einem Untergrund 19 auf, insbesondere an einem äußeren Randbereich einer Unterseite des Gehäuses 4 und/oder innerhalb oder neben einer Griffmulde 41 mit Lüftungsöffnungen 42. Insgesamt weist die Küchenmaschine 1 der Fig. 1 zwischen zwei und vier Gewichtssensoreinheiten 10 auf, bevorzugt genau drei Gewichtssensoreinheit 10. Insbesondere umfasst jede der Gewichtssensoreinheit 10 jeweils genau ein Brückenelement 14, einen Sensor 15 zur Ausgabe eines analogen Gewichtsmesssignals, genau einen Analog-Digital-Wandler 16 für die analogen Gewichtsmesssignale des Sensors 15, genau eine digitale Signalverarbeitungseinheit 17 zum Verarbeiten der von dem Analog-Digital-Wandler 16 in digitale Signale umgewandelten analogen Gewichtsmesssignale des Sensors 15 sowie genau eine Speichereinheit 18, auf dem mindestens ein Kalibrierwert des Sensors 15 gespeichert ist.

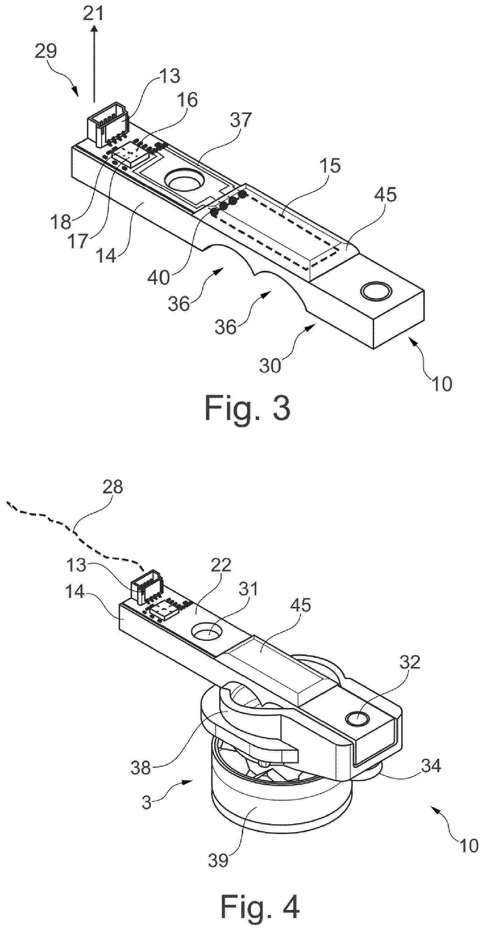

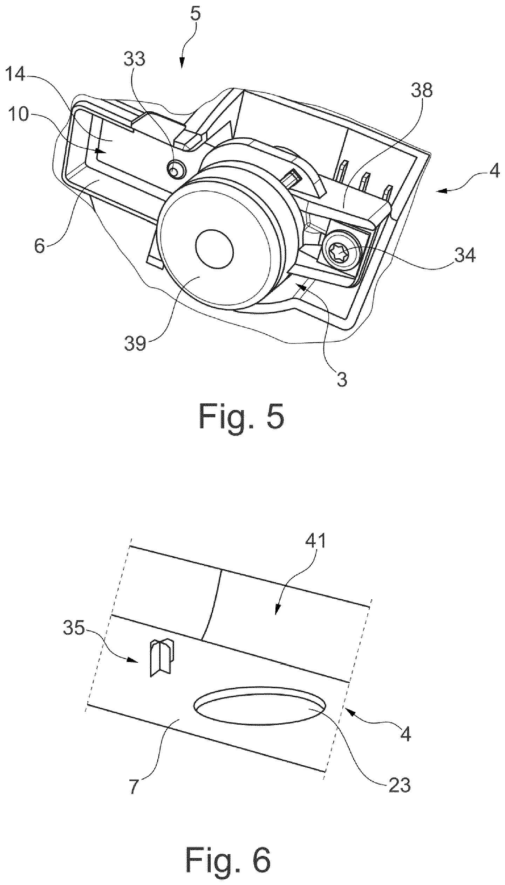

Die Figur 3 zeigt schematisch eine Gewichtssensoreinheit 10, insbesondere der Küchenmaschine 1 der Fig. 1 und/oder Fig. 2. Die Figur 4 zeigt schematisch eine an einer Abstützeinheit 3 befestigten Gewichtssensoreinheit 10, insbesondere die Gewichtssensoreinheit 10 der Fig. 3. Die Figur 5 zeigt schematisch einen Ausschnitt eines oberen Gehäuseteils 6 von schräg unten mit der Abstützeinheit 3 und der Gewichtssensoreinheit 10 insbesondere der Fig. 4 im an dem Befestigungsbereich 5 des oberen Gehäuseteils 6 des Gehäuses 4 befestigten Zustand. Die Figur 6 zeigt schematische einen Ausschnitt eines unteren Gehäuseteil 6, insbesondere des Gehäuses 4 der Küchenmaschine 1 der Fig. 1 und/oder Fig. 2. Die Bezugszeichen der Figuren 3 bis 6 werden einheitlich verwendet und gelten für alle Figuren 3 bis 6 gleichermaßen, auch wenn ein Bezugszeichen nur in einer der genannten Figuren enthalten ist.

Die gezeigte Gewichtssensoreinheit 10 weist ein Brückenelement 14 auf, das insbesondere aus Aluminium gefertigt ist und einerseits an einen Befestigungsbereich 5 des Gehäuses 4 und andererseits an einer Abstützeinheit 3 mechanisch befestigt ist und eine Brücke dazwischen bildet, derart, dass sich das von der Gewichtssensoreinheit 10 ausgegebene digitale Gewichtsmesssignal 21 erhöht, wenn eine Speise 20 in den Topf 2 der Küchenmaschine 1 hinzugefügt wird, insbesondere linear zum hinzugefügten Gewicht erhöht. In einer Ausgestaltung ist die bzw. jede Gewichtssensoreinheit 10 so konfiguriert, dass dessen digitales Gewichtsmesssignal 21 eine Auflösung von 1 g und/oder eine Unterteilung zwischen 0 und 7 Kg durch 7000 Schritte, Intervalle oder Rastereinheiten dazwischen erlaubt. Insbesondere ist ein Signalhub von mindestens 470nV/g vorgesehen. Mit Linearisierung ist gemeint, dass das digitale Gewichtsmesssignal linear zum tatsächlichen Gewicht ist. Insbesondere Dehnungsmessstreifen als Sensor 15 haben prozessbedingt unterschiedliche Steigungen des analogen Signals (z.B. in der Einheit mV) über dem gemessenen Gewicht, und/oder unterschiedliche Offsets. Bei der Kalibrierung werden ein oder mehrere Korrekturfaktoren ermittelt und auf der Speichereinheit 18 abgespeichert, womit anschließend durch die Signalverarbeitungseinheit 17 aus den analogen Signalen die Steigung und/oder das Offset entsprechend zur Linearisierung angepasst werden können. Die Kalibrierung erfolgt in einer Ausgestaltung anhand zweier Punkte: das Maximalgewicht (z.B. 7kg) und Minimalgewicht (z.B. 0kg). In einer Weiterentwicklung ist vorgesehen, im Rahmen der Kalibration und späteren Signalverarbeitung weitere Stützstellen hinzuzufügen, um bei einem Sensor 15 mit Abschnitten unterschiedlicher Steigung dennoch eine Linearisierung zu erzielen.

An der Oberseite des Brückenelements 14 ist bevorzugt an einem ersten Ende 29 eine Platine 22, vorzugsweise nur eine gemeinsame Platine 22, angeordnet und/oder auf das Brückenelement 14 geklebt. Die Platine 22 bildet den Träger für einen Analog-Digital-Wandler 16, eine Signalverarbeitungseinheit 17, eine Speichereinheit 18 und mindestens zwei Leiterbahnen 37 sowie einen Anschluss 13 für ein oder mehrere Kabel 28 (in Fig. 4 entspricht die gestrichelte Linie einem Kabel oder mehreren Kabeln) zur digitalen Datenübertragung und/oder Energieversorgung, z.B. ein Kabel 28 zur Datenübertragung und mindestens ein weiteres Kabel 28 für die Energieversorgung. Bevorzugt dient die Signalverarbeitungseinheit 17 zugleich zur Energieversorgung des Sensors 15 und/oder des Analog-Digital-Wandlers 16. Die Speichereinheit 18 enthält bereits den mindestens einen Kalibierwert aus einer vorangegangenen Kalibrierung der in Fig. 3 dargestellten Gewichtssensoreinheit 10, bevor die Gewichtssensoreinheit 10 wie in den Fig. 4 und 5 gezeigt bevorzugt zuerst an der Abstützeinheit 3 und vorzugsweise anschließend an dem Gehäuse 4 im Zuge der Montage befestigt wird. Insbesondere wird für die der Montage vorangehende Kalibrierung der Gewichtssensoreinheit 10 diese in einer entsprechend hierfür eingerichteten Vorrichtung mit definierten Gewichtskräften belastet und ein Referenzwertvergleich mit den Messwerten durchgeführt, so dass aus der Differenz oder den Differenzen der mindestens eine Kalibrierwert ermittelt und in der Speichereinheit 18 gespeichert wird.

Insbesondere sind eine Kerbe 36 oder zwei nebeneinander angeordnete Kerben 36 an der Unterseite des Brückenelements 14 vorhanden, um die Dicke des Brückenelements 14 zu reduzieren. Insbesondere weist die Kerbe 36 oder beide Kerben 36 einen Kerbradius auf, der für beide Kerben 36 gleich und/oder mindestens 80% der Höhe des Brückenelements 14 beträgt. Vorzugsweise ist der Sensor 15 mit dem mindestens einen Dehnmessstreifen auf der gegenüberliegenden Seite der Kerbe 36 bzw. Kerben 36 an dem Brückenelement 14 angebracht. Vorzugsweise ist der Sensor 15 mit einer Schutzschicht 45, bevorzugt aus Silikon, flächig überzogen, vorzugsweise mit einer Schichtdicke von mindestens 1 mm und/oder höchstens 3 mm. Die hierdurch erzielte Feuchteisolation führt zu einer robusten Gewichtsmesspräzision.

Im Zuge der Gewichtsmessung führt eine Gewichtskraft von dem Gehäuse, das über das Brückenelement 14 auf die daran befestigte Abstützeinheit 3 übertragen wird, zu einer Biegung des Brückenelements 14, so dass durch die hierdurch erzeugte mechanische Spannung bzw. Spannungsänderung, insbesondere Druckspannung, sich das analoge Gewichtsmesssignal des Sensors 15 bzw. des oder der Dehnmesstreifen ändert, die auf der Oberseite des Brückenelements 14 verklebt sind. Der Sensor 15, insbesondere die Dehnmessstreifen, erstrecken sich in Längserstreckung des Brückenelements 14 bevorzugt über den gesamten Bereich der Kerben 36, wo sich grundsätzlich die Biegung und Spannungen lokal konzentrieren. In einer Ausgestaltung bilden genau vier Dehnmessstreifen einen Sensor 15, vorzugsweise in Form einer Wheatstoneschen Brücke, so dass die vier Dehnmessstreifen mit vier Verbindungspunkten in Reihe geschaltet sind, wobei das Ende des letzten Dehnmessstreifen an den Anfang des ersten Dehnmessstreifen über einen der Verbindungspunkte verbunden ist. Alle vier Verbindungspunkte sind bevorzugt ausschließlich über Lötstellen 40 und Leiterbahnen 37 elektrisch leitend entweder mit einer Energiequelle oder einem Analog-Digital-Wandler 16 verbunden. Über zwei der Verbindungspunkte wird elektrische Energie zugeführt, während die anderen zwei Verbindungspunkte das analoge Gewichtsmesssignal, insbesondere Differenzspannungen oder Brückenspeisespannungen, ausgeben. In einer Ausgestaltung, in der der Analog-Digital-Wandler 16 und die digitale Signalverarbeitungseinheit 17 durch einen gemeinsamen Baustein realisiert sind, sind alle vier Verbindungspunkte über Lötstellen 40 und Leiterbahnen 37, also insbesondere ohne Kabel, mit diesem Baustein verbunden. In einer Ausgestaltung enthält dieser Baustein, insbesondere ein Microcontroller oder Chip, auch die Speichereinheit 18. In einer alternativen Ausgestaltung enthält der Baustein mit dem integrierten Analog-Digital-Wandler 16 und der integrierten digitale Signalverarbeitungseinheit 17 nicht die Speichereinheit 18 zum Speichern des mindestens einen Kalibrierungswertes, der dann als separater Baustein, z.B. als EPROM, ausgeführt ist, optional mit einer Bus-Verbindung zur Signalverarbeitungseinheit 17, vorzugsweise einer I2C-Busverbindung. Dieser separate Baustein ist dann ebenfalls nur über Leiterbahnen auf einer insbesondere gemeinsamen Platine oder flexibler Leitfolie mit dem anderen Baustein verbunden. Mithilfe des mindestens einen Kalibrierwertes wird insbesondere eine Linearisierung des digitalen Gewichtsmesssignals 21 durch die Signalverarbeitungseinheit 17 ermöglicht.

Das Brückenelement 14 ist mithilfe einer ersten Schraube 33 durch eine erste Öffnung 31 vorzugsweise mit Innengewinde an dem ersten Ende 29 bewegungsfest mit dem Befestigungsbereich 5 des Gehäuses 4 verbunden, und zwar mit einem oberen Gehäuseteil 6 des Gehäuses 4 durch die erste Schraube 33 verschraubt. Insbesondere ist die Platine 22 (vgl. Fig. 3) eine flexible Leiterfolie, durch die sich die erste Öffnung 31 erstreckt. Das Brückenelement 14 ist mithilfe einer zweiten Schraube 34 an einem zweiten Ende 30 bewegungsfest mit der Abstützeinheit 3 geschraubt. Die zweite Schraube 34 ist in einer Ausgestaltung alternativ als Bolzen mit Presspassung ausgeführt.

Wie Fig. 4 illustriert, ist die Abstützeinheit 3 bevorzugt mehrteilig und/oder umfasst ein oberes Aufnahmeelement 38, das an einem unteren Abstützelement 39 zum Aufsetzen auf einen Untergrund 19 bewegungsfest befestigt ist. Das Abstützelement 39 ist insbesondere zylinderförmig und/oder hat eine größere Querausdehnung als die Breite des Brückenelements 14. Das Aufnahmeelement 38 weist bevorzugt eine Gegenkontur mit seitlichen Führungen auf, die im befestigten Zustand des Brückenelements 14 am zweiten Ende 30 das Brückenelement 14 so einfassen, dass ein Drehen des Brückenelements 14 mit der zweiten Öffnung 32 als Drehachse verhindert und/oder eine Kippbewegung

Wie Fig. 5 zeigt, ist das Brückenelement 14 an dem ersten Ende 29 mit der erste Schraube 33 an dem Befestigungsbereich 5 befestigt ist und/oder ist an dem zweiten Ende 30 mit einer zweiten Schraube 34 durch eine zweite Öffnung 32 des Brückenelements 14 an der Abstützeinheit 3 befestigt. Bevorzugt ist die zweite Schraube 34 ausgehend von der Abstützeinheit 3 von unten nach oben durch die zweite Öffnung 32 geschraubt. Insbesondere enthält das obere Gehäuseteil 6 also den Befestigungsbereich 5, an dem das Brückenelement 14 bewegungsfest befestigt ist.

Wie Fig. 6 zeigt, enthält das untere Gehäuseteil 7 einen sich nach oben erstreckenden Vorsprung 35 (vgl. Fig. 6), auf dem in einem montierten Zustand der Küchenmaschine 1 ein Ende einer ersten Schraube 33 aufliegt. Bevorzugt ist der Vorsprung 35 stoffschlüssig durch Spritzgießen des gesamten, unteren Gehäuseteils 7 gebildet. Vorzugsweise hat der Vorsprung 35 eine kreuzartige Querschnittskontur in dessen Erstreckungsrichtung (nach oben). Insbesondere wird der Vorsprung 35 im Querschnitt betrachtet durch drei Stege gebildet, von denen zwei der Stege gleich groß sind und versetzt zueinander an gegenüberliegenden Seiten des dritten Stegs davon abstehen, um insgesamt eine kreuzartige Form zu erzeugen. Alle Stege bilden gemeinsam am freien Ende des Vorsprungs 35 eine kreuzartige Auflagefläche, auf der im montierten Zustand der Küchenmaschine 1 die erste Schraube 33 (vgl. Fig. 5) aufliegt. Die erste Schraube 33 ist ausgehend vom oberen Gehäuseteil 6 von oben insbesondere durch eine nicht dargestellte Befestigungsöffnung in dem oberen Gehäuseteil 6 und anschließend durch eine erste Öffnung 31 des Brückenelements 14 geschraubt, um den oberen Gehäuseteil 6 bewegungsfest an dem Brückenelement 14 zu befestigen.

Das untere Gehäuseteil 7 ist mit einer Durchführung in Form einer Durchführungsöffnung 23 versehen, durch die sich insbesondere die Abstützeinheit der Fig. 5 zum Untergrund 19 erstreckt, wenn der obere Gehäuseteil 6 im Rahmen der Montage der Küchenmaschine 1 an dem unteren Gehäuseteil 7 montiert wird. In der Fig. 6 ist auch eine optional vorhandene Griffmulde 41 illustriert, insbesondere die Griffmulde 41 der Fig. 1, wobei etwaige Lüftungsöffnungen 42 wie in Fig. 1 in der Fig. 6 zum Zwecke einer vereinfachten Darstellung ebenso wie weitere Konturen des unteren Gehäuseteils nicht eingezeichnet sind.

Durch die gezeigten Ausführungsbespiele kann eine verbesserte Küchenmaschine 1 mit einer besonders präzisen Gewichtsmessung mit geringerem Herstellungsaufwand bereitgestellt und hergestellt werden.

Eine Gewichtsmessung, die durch die direkte Umwandlung in ein digitales Signal unempfindlicher gegen Störeinflüsse einschließlich Temperaturschwankungen ist, kann so realisiert werden. Zudem werden kürzere Leitungswege für die analogen Signale der Sensoren (zum AD-Wandler) ermöglicht, die eine ebenfalls höhere Robustheit gegen äußere Einflüsse und eine größere Messgenauigkeit realisierbar machen.

### Bezugszeichenliste:

- 1: Küchenmaschine
- 2: Topf
- 3: Abstützeinheit
- 4: Gehäuse
- 5: Befestigungsbereich
- 6: Oberes Gehäuseteil
- 7: Unteres Gehäuseteil
- 8: Antrieb
- 9: Werkzeug
- 10: Gewichtssensoreinheit
- 11: Heizeinrichtung
- 12: Topfaufnahmebereich
- 13: Anschluss
- 14: Brückenelement
- 15: Sensor
- 16: AD-Wandler
- 17: Signalverarbeitungseinheit
- 18: Speichereinheit
- 19: Untergrund
- 20: Speise
- 21: Gewichtsmesssignal
- 22: Platine
- 23: Durchgangsöffnung
- 24: Benutzerschnittstelle
- 25: Touchscreen-Display
- 26: Drehknopf
- 27: Steuerungseinheit
- 28: Kabel
- 29: Erstes Ende
- 30: Zweites Ende
- 31: Erste Öffnung
- 32: Zweite Öffnung
- 33: Erste Schraube
- 34: Zweite Schraube
- 35: Vorsprung
- 36: Kerbe
- 37: Leiterbahn
- 38: Aufnahmeelement
- 39: Abstützelement
- 40: Lötstelle
- 41: Griffmulde
- 42: Lüftungsöffnungen
- 43: Welle
- 44: Standfuß
- 45: Schutzschicht

## Patentansprüche

1. Küchenmaschine (1) zum Zubereiten einer Speise (20) durch Zerkleinern und/oder Erhitzen der Speise (20) in einem Topf (2) der Küchenmaschine (1), wobei die Küchenmaschine (1) umfasst:
- eine oder mehrere Abstützeinheiten (3) zum Abstützen der Küchenmaschine (1) auf einem Untergrund (19),
- ein Gehäuse (4) mit einem Topfaufnahmebereich (12) für den Topf (2), und
- einen Antrieb (8) innerhalb des Gehäuses (4) zum Antreiben eines Werkzeugs (9) für das Zerkleinern einer Speise (20),
**dadurch gekennzeichnet, dass**
die Küchenmaschine (1) eine Gewichtssensoreinheit (10) aufweist, die umfasst:
- ein Brückenelement (14),
- einen Sensor (15) zur Ausgabe eines analogen Gewichtsmesssignals,
- ein Analog-Digital-Wandler (16),
- eine digitale Signalverarbeitungseinheit (17) und
- eine Speichereinheit (18) zum Speichern mindestens eines Kalibrierungswertes, wobei der Analog-Digital-Wandler (16) und die digitale Signalverarbeitungseinheit (17) so konfiguriert sind, dass der Analog-Digital-Wandler (16) das analoge Gewichtsmesssignal in ein digitales Signal umgewandelt, das durch die digitale Signalverarbeitungseinheit (17) mithilfe des mindestens eines Kalibrierungswertes der Speichereinheit (18) verarbeitet wird, um ein digitales Gewichtsmesssignal (21) zu erzeugen, das von der Gewichtssensoreinheit (10) bereitgestellt werden kann,
wobei der Sensor (15), der Analog-Digital-Wandler (16), die Signalverarbeitungseinheit (17) und die Speichereinheit (18) an dem Brückenelement (14) angebracht sind, und das Brückenelement (14) einen Befestigungsbereich (5) des Gehäuses (4) mit einer der einen oder mehreren Abstützeinheiten (3) mechanisch verbindet, derart, dass sich das von der Gewichtssensoreinheit (10) ausgegebene digitale Gewichtsmesssignal (21) erhöht, wenn eine Speise (20) in den Topf (2) der Küchenmaschine (1) hinzugefügt wird, wobei die Küchenmaschine (1) eine oder mehrere Gewichtssensoreinheiten (10) aufweist.

2. Küchenmaschine (1) nach dem vorhergehenden Anspruch, **dadurch gekennzeichnet, dass** die Küchenmaschine (1) eine Benutzerschnittstelle (24), über die ein Gewicht einer sich in dem Topf (2) befindlichen Speise (20) anzeigt werden kann, und eine Steuerungseinheit (27) zum Steuern der Benutzerschnittstelle (24) umfasst, wobei die Küchenmaschine (1) so konfiguriert ist, dass wenn mehrere Gewichtssensoreinheiten (10) vorhanden sind, die Steuerungseinheit (27) von jeder der Gewichtssensoreinheiten (10) jeweils ein separates digitales Gewichtsmesssignal (21) erhält und daraus das Gewicht einer sich in dem Topf (2) befindlichen Speise (20) berechnet, insbesondere durch Aufaddieren der separaten digitalen Gewichtsmesssignale (21) der einzelnen Gewichtssensoreinheiten (10), um es über die Benutzerschnittstelle (24) anzuzeigen.

3. Küchenmaschine (1) nach einem der vorhergehenden Ansprüche, **dadurch gekennzeichnet, dass** die Gewichtssensoreinheit (10) so konfiguriert ist, dass die Speichereinheit (18) den mindestens einen Kalibrierungswert der Gewichtssensoreinheit (10) umfasst, wenn die Gewichtssensoreinheit (10) montiert wird.

4. Küchenmaschine (1) nach einem der vorhergehenden Ansprüche, **dadurch gekennzeichnet**, wenn mehrere Gewichtssensoreinheiten (10) vorgesehen sind, die Gewichtssensoreinheiten (10) baugleich sind.

5. Küchenmaschine (1) nach einem der vorhergehenden Ansprüche, **dadurch gekennzeichnet, dass** das Brückenelement (14) oder jedes der Brückenelemente (14) jeweils mit einem ersten Ende (29) bewegungsfest an dem Befestigungsbereich (5) des Gehäuses (4) und mit einem zweiten Ende (30) bewegungsfest an dem Abstützeinheit (3) befestigt ist, vorzugsweise durch Verschraubung.

6. Küchenmaschine (1) nach einem der vorhergehenden Ansprüche, **dadurch gekennzeichnet, dass** das Gehäuse (4) mehrteilig ist und ein oberes Gehäuseteile (6) und ein unteres Gehäuseteile (7) umfasst.

7. Küchenmaschine (1) nach dem vorhergehenden Anspruch, **dadurch gekennzeichnet, dass** das obere Gehäuseteil (6) den Befestigungsbereich (5) aufweist, an dem das Brückenelement (14) bewegungsfest befestigt ist.

8. Küchenmaschine (1) nach einem der zwei vorhergehenden Ansprüche, **dadurch gekennzeichnet, dass** das untere Gehäuseteil (7) einen nach oben erstreckenden Vorsprung (35) umfasst, auf dem in einem montierten Zustand der Küchenmaschine (1) ein Ende einer ersten Schraube (33) aufliegt.

9. Küchenmaschine (1) nach dem vorhergehenden Anspruch, **dadurch gekennzeichnet, dass** die erste Schraube (33) ausgehend vom oberen Gehäuseteil (6) von oben durch eine erste Öffnung (31) des Brückenelements (14) geschraubt ist, um den oberen Gehäuseteil (6) bewegungsfest an dem Brückenelement (14) zu befestigen.

10. Küchenmaschine (1) nach Anspruch 5 und dem vorhergehenden Anspruch, **dadurch gekennzeichnet, dass** das Brückenelements (14) an dem ersten Ende (29) mit der erste Schraube (33) an dem Befestigungsbereich (5) befestigt ist und/oder an dem zweiten Ende (30) mit einer zweiten Schraube (34) durch eine zweite Öffnung (32) des Brückenelements (14) an der Abstützeinheit (3) befestigt ist.

11. Küchenmaschine (1) nach dem vorhergehenden Anspruch, **dadurch gekennzeichnet, dass** die zweite Schraube (34) ausgehend von der Abstützeinheit (3) von unten nach oben durch die zweite Öffnung (32) geschraubt ist.

12. Küchenmaschine (1) nach einem der vorhergehenden Ansprüche, **dadurch gekennzeichnet, dass** der Analog-Digital-Wandler (16), die Signalverarbeitungseinheit (17), die Speichereinheit (18) und mindestens zwei Leiterbahnen (37) auf einer gemeinsamen Platine (22) angeordnet sind und/oder der Sensor (15) ein oder mehrere Dehnmessstreifen umfasst, der oder die mit den Leiterbahnen (37) verbunden sind.

13. Küchenmaschine (1) nach dem vorhergehenden Anspruch, **dadurch gekennzeichnet, dass** die Platine (22) eine flexible Leiterfolie ist und/oder sich die erste Öffnung (31) durch die Platine (22) erstreckt.

14. Küchenmaschine (1) nach dem vorhergehenden Anspruch, **dadurch gekennzeichnet, dass** ein Anschluss (13) für ein oder mehrere Kabel (28) zur digitalen Datenübertragung und/oder Energieversorgung auf der Platine (22) und/oder von dem zweiten Ende (30) aus betrachtet hinter der ersten Öffnung (31) auf dem Brückenelement (14) angeordnet ist.

15. Herstellungsverfahren zum Herstellen einer Küchenmaschine (1) nach einem der vorhergehenden Ansprüche, **dadurch gekennzeichnet, dass** das Herstellungsverfahren folgende Schritte in der nachfolgenden, zeitlichen Reihenfolge umfasst:
- Herstellen einer Gewichtssensoreinheit (10) mit einem Brückenelement (14), auf dem ein Sensor (15) zur Ausgabe eines analogen Gewichtsmesssignals, ein Analog-Digital-Wandler (16), eine digitale Signalverarbeitungseinheit (17) und ein Speichereinheit (18) zum Speichern mindestens eines Kalibrierungswertes angebracht sind,
- Kalibrieren der Gewichtssensoreinheit (10) und Speichern des mindestens einen Kalibrierungswertes auf der Speichereinheit (18),
- Montieren der Gewichtssensoreinheit (10) in eine Küchenmaschine (1) zwischen einen Befestigungsbereich (5) eines Gehäuses (4) der Küchenmaschine (1) und eine Abstützeinheit (3).
